# EUROPEAN PATENT APPLICATION

(11) **EP 2 743 926 A1**
(43) Date of publication of application: **18.06.2014**
(21) Application number: 12822183.5
(22) Date of filing: 08.03.2012
(51) Int. Cl.: G11B 19/02, G11B 27/10, G11B 27/34

(54) **DATA PROCESSING DEVICE**

(30) Priority: 08.08.2011 JP 2011173038
(71) Applicant: Panasonic Corporation, Kadoma-shi, Osaka 571-8501 (JP)
(72) Inventor: TANIKAWA, Kentaro, Chuo-ku, Osaka 540-6207 (JP); SASAKI, Miyuki, Chuo-ku, Osaka 540-6207 (JP); IZUMI, Kenji, Chuo-ku, Osaka 540-6207 (JP); KODAMA, Masayoshi, Chuo-ku, Osaka 540-6207 (JP)
(74) Representative: Grünecker, Kinkeldey, Stockmair & Schwanhäusser
(86) International application number: PCT/JP2012/001611
(87) International publication number: WO 2013/021517

(57) **Abstract**

There is a provided a data processing apparatus capable of rapid displaying of an image concerning a program table, a list of retained contents, or the like.

The data processing apparatus includes: a first storage medium having a relatively long activation time from an initial state until a first access is completed; a second storage medium having a relatively short activation time, the second storage medium previously retaining image data; a reception section for receiving a request to display the image data; and a control section for executing a first process and a second process when a request to display is received in a power OFF state. The first process executed by the control section is a process of outputting the image data retained in the second storage medium. The second process is a process of starting activation of the first storage medium, and after activation of the first storage medium is completed so that the first storage medium becomes accessible, outputting data which is stored in the first storage medium or information which is generated based on the data.

## Description

### TECHNICAL FIELD

The present invention relates to a data processing apparatus which generates and records image data, and more particularly to a data processing apparatus which generates image data concerning a program table of a broadcast wave, etc., or concerning a list of stored contents.

### BACKGROUND ART

Patent Document 1 discloses a magnetic disk apparatus. In this magnetic disk apparatus, a frame data detection section detects frame data of a content to be recorded or reproduced, and a position information management section stores position information. A control section causes the frame data, its position information, and information of an operating status of the magnetic disk apparatus to be stored in a flash memory, and causes these to be read into a buffer memory upon power activation.

With this magnetic disk apparatus, if a request is made at the time of power activation for a content search, through the contents that are recorded in the magnetic disk apparatus, or for displaying thumbnails, it is possible to perform the process of content searching or thumbnail displaying at low power consumption, without activating the magnetic disk and lowering the efficiency of data transfer.

### CITATION LIST

### PATENT LITERATURE

[Patent Document 1] Japanese Laid-Open Patent Publication No. 2001-266452

### SUMMARY OF INVENTION

### TECHNICAL PROBLEM

In the magnetic disk apparatus of Patent Document 1, various data are stored in a flash memory, e.g., frame data, the position information of the frames, and the information of the operating status of the magnetic disk apparatus. Therefore, the flash memory needs to have a relatively large storage capacity. Generally speaking, a flash memory increases in price as its storage capacity increases. Therefore, it is preferable that the storage capacity is as small as possible.

The present invention aims to realize rapid image displaying concerning a program table, a list of retained contents, or the like, while keeping the use of expensive storage media to a minimum.

### SOLUTION TO PROBLEM

A data processing apparatus according to one implementation of the present invention comprises: a first storage medium having a relatively long activation time from an initial state until a first access is completed; a second storage medium having a relatively short said activation time, the second storage medium previously retaining image data; a reception section for receiving a request to display the image data; and a control section for executing a first process and a second process when the request to display is received in a power OFF state. The first process is a process of outputting the image data retained in the second storage medium, and the second process is a process of starting activation of the first storage medium, and after activation of the first storage medium is completed so that the first storage medium becomes accessible, outputting data which is stored in the first storage medium or information which is generated based on the data.

In one embodiment, the second storage medium may retain image data concerning a program table of broadcast programs.

In one embodiment, the first storage medium stores at least one content; and as the second process, the control section executes a process of outputting the image data concerning the at least one content after the first storage medium becomes accessible.

In one embodiment, supply of power to the second storage medium is continued in the power OFF state; and the second storage medium retains the image data with the supply of power.

In one embodiment, supply of power to the first storage medium is discontinued in the power OFF state; and the control section executes the second process by starting supply of power to the first storage medium.

In one embodiment, if the reception section receives an instruction which requires access to the first storage medium before the first storage medium becomes accessible, the control section executes a process of outputting message data.

In one embodiment, the first storage medium stores at least one content; and if the reception section receives an instruction to reproduce the at least one content before the first storage medium becomes accessible, the control section executes a reproduction process of the content after the first storage medium becomes accessible.

In one embodiment, if the reception section receives an instruction to execute a predetermined process before the first storage medium becomes accessible, the control section discards the instruction to execute.

In one embodiment, the first storage medium is a hard disk drive and the second storage medium is a DRAM or a flash memory.

In one embodiment, the data processing apparatus further comprises a terminal which is connected to a display device to output the image data to the display device, wherein, through the first process, the control section outputs the image data from the terminal to be displayed by the display device.

The first storage medium, the second storage medium, the reception section, the control section, and the display device are mounted in a single housing.

In one embodiment, the second storage medium includes a rendering buffer previously retaining the image data and a frame buffer; and during the first process, the control section transfers the image data retained in the rendering buffer to the frame buffer, and outputs the image data from the frame buffer.

A data processing apparatus according to another implementation of the present invention comprises: a first storage medium having a relatively long activation time from an initial state until a first access is completed; a second storage medium having a relatively short said activation time, the second storage medium previously retaining control data; and a control section for, when a transition from power ON to power OFF occurs, generating image data based on the control data and causing the image data to be stored to the second storage medium, and stopping operation of the first storage medium. When at least one content is stored in the first storage medium, control data including information concerning the at least one content is stored in the second storage medium, and the control section generates image data representing the at least one content based on the control data, and causes the image data to be stored to the second storage medium.

In one embodiment, the second storage medium stores control data including information concerning a plurality of broadcast programs; and the control section generates image data representing a program table concerning the plurality of broadcast programs based on the control data, and causes the image data to be stored to the second storage medium.

In one embodiment, as the image data, the control section causes color data with respect to each unit composing an image to be stored to the second storage medium.

In one embodiment, the second storage medium at least includes a work memory and a rendering buffer; and the control section causes the image data to be stored to the rendering buffer, and causes data other than the image data to be stored to the work memory.

In one embodiment, the control section stops operation of the first storage medium by discontinuing supply of power to the first storage medium.

In one embodiment, supply of power to the second storage medium is continued in the power OFF state; and the second storage medium retains the image data with the supply of power.

In one embodiment, the control section is a computer; and the control section executes a program of a first application for generating image data representing a program table concerning the plurality of broadcast programs based on the control data and a program of a second application for generating image data representing the at least one content based on the control data.

In one embodiment, in the power OFF state, the control section maintains a running state of the first application and the second application.

In one embodiment, if the reception section receives an instruction to execute a predetermined process before the first storage medium becomes accessible, the control section discards the instruction to execute.

A data processing apparatus according to still another implementation of the present invention comprises: an interface for connecting to a network, the network having connected thereto at least one storage device storing a content; a storage medium previously retaining image data including information concerning the content stored in the at least one storage device; a reception section for receiving a request to display the image data; and a control section for, when the request to display is received in a power OFF state, outputting the image data stored in the storage medium.

### ADVANTAGEOUS EFFECTS OF INVENTION

According to the present invention, there is provided an output apparatus and recording apparatus which can realize rapid displaying of the data of a list of stored contents, with a storage medium of a smaller capacity than conventional.

### BRIEF DESCRTPTION OF DRAWINGS

[FIG. 1] A diagram showing the construction of a system 100 according to an illustrative embodiment.
[FIG. **2**] A diagram showing the construction of a recorder 101 according to an illustrative embodiment.
[FIG. **3****]** A diagram showing the construction of a memory 204 according to an illustrative embodiment.
[FIG. **4****]** An outer view of a remote control 103 according to an illustrative embodiment.
[FIG. **5****]** A flowchart for explaining a transition from power ON to power OFF of the recorder 101 according to an illustrative embodiment.
[FIG. **6**] A diagram showing an exemplary recorded-program information table 600 according to an illustrative embodiment.
[FIG. **7****]** A flowchart for explaining a transition from power OFF to power ON of the recorder 101 according to an illustrative embodiment.
[FIG. **8A****]** A diagram showing an exemplary program table **800a** which is displayed after a program table button 402 is pressed.
[FIG. **8B**] A diagram showing an updated instance of displayed image **800b** of a program table.
[FIG. 9] A diagram showing an exemplary image 700 of a list of recordings that is displayed when an HDD 203 cannot be accessed.
[FIG. **10**] A flowchart for explaining a process by a list-of-recordings application according to an illustrative embodiment, which depends on whether HDD access is possible or not.
[FIG. **11****]** A diagram showing an exemplary displayed image of a list of recorded programs 1100 in which an alarm panel 1101 is displayed in superposition.
[FIG. **12****]** A diagram showing an updated image 1200 of a list of recordings.
[FIG. **13****]** A flowchart for explaining a process by a list-of-recordings application according to an illustrative embodiment until HDD access becomes possible.
[FIG. **14****]** A diagram showing an exemplary displayed image of a list of recorded programs 1400 in which an alarm panel 1401 is displayed in superposition.
[FIG. **15****]** A diagram showing the construction of a system 110 according to a variant of the embodiment.
[FIG. **16****]** A diagram showing the construction of a recorder **151** according to a variant.
[FIG. **17****]** A diagram showing an exemplary image **750** of a list of recordings that is displayed when an HDD **203** and an HDD 253 cannot be accessed.
[FIG. **18****]** A diagram showing an exemplary image of a list of recorded programs **760** stored in all storage media that can be accessed by the recorder **151.**

### DESCRIPTION OF EMBODIMENTS

A data processing apparatus according to the present invention includes: a storage medium (first storage medium) which incurs a relatively long time (activation time) from a state where an access request is issued (initial state) until a first access is completed; and a storage medium (second storage medium) for which the same is relatively short. An example of the former is a hard disk drive (HDD), and an example of the latter is a DRAM. The activation time being fast or slow depends on whether powering is continued or not when source power is OFF.

When the apparatus is powered OFF through a user manipulation, timer operation, or the like, the data processing apparatus stores predetermined data (image data) to the second storage medium, so that it is kept ready for immediate output. Thereafter, the apparatus is powered OFF. In the case where the second storage medium is a DRAM, power supply to the DRAM is continued and the aforementioned data is retained even in a state where the data processing apparatus is powered OFF. On the other hand, power supply to the first storage medium (e.g., an HDD) is discontinued.

When a request for an output of the stored data is received in a power OFF state, the data processing apparatus issues an access request to the second storage medium. As a result, the data stored in the second storage medium is output relatively rapidly. Since the second storage medium incurs a relatively short time from an initial state until a first access is completed, even in a state where the first storage medium is not activated, the requested data is output without waiting for its activation to be completed.

Hereinafter, with reference to the attached drawings, a recorder as a preferred embodiment of the present invention will be described.

### 1. System construction including a recorder

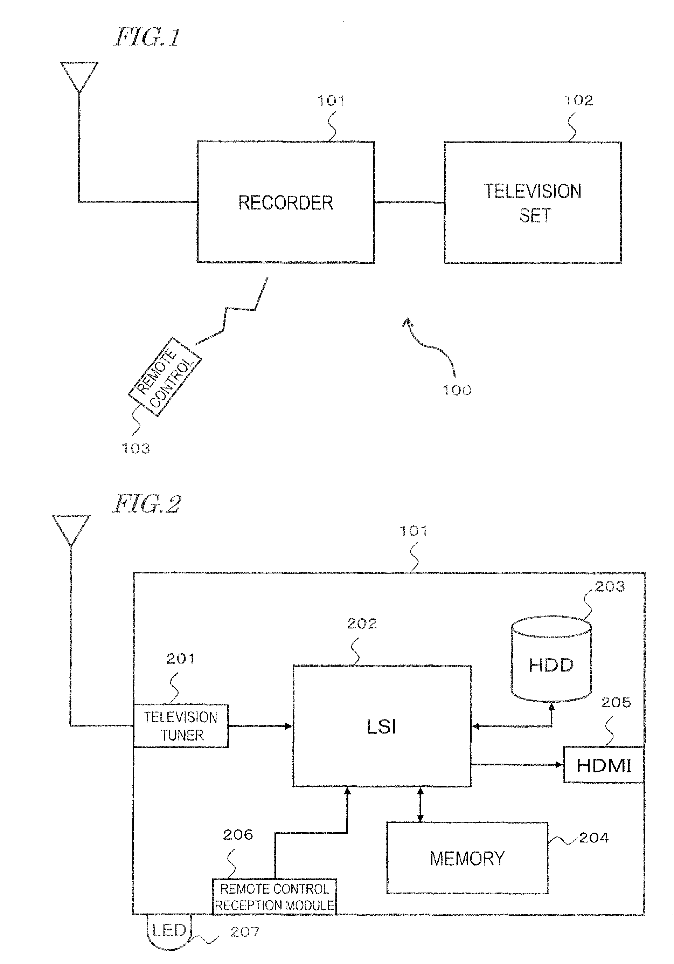

FIG. 1 is a diagram showing the construction of a system **100** according to the present embodiment. In the present embodiment, the system **100** includes two electronic devices: a recorder **101** and a television set **102.** The electronic devices are controlled based on a control signal from a remote control **103.**

The recorder **101** is, for example, of a type having an internal HDD, and is capable of receiving a broadcast signal to record a program onto the HDD. The recorder **101** is connected to the television set **102** via a cable under the HDMI (registered trademark) standard, for example. In accordance with a user's instruction from the remote control **103,** the recorder **101** outputs a video signal to the television set **102.**

Although the system **100** is composed of a plurality of devices (the recorder **101** and the television set **102),** this is an example. An apparatus which includes the recorder **101** and the television set **102** in a single housing would also fall within the bounds of the aforementioned system **100.** The following description will be based on the construction shown in FIG. **1****.**

In the present specification, the recorder **101** alone, or an apparatus in which the recorder **101** and the television set **102** are integrated, may be referred to as an output apparatus or a data processing apparatus.

### 2. Construction of recorder 101

FIG. **2** shows the construction of the recorder **101** according to the present embodiment. The recorder **101** includes a television tuner **201,** an LSI **202,** an HDD **203,** a memory **204,** an HDMI terminal **205,** a remote control reception module **206,** and an LED **207.**

Via the remote control reception module **206,** the recorder **101** accepts a remote control manipulation by a user, and performs various operations.

For example, the recorder 101 receives a broadcast signal corresponding to a channel that is designated through remote control manipulation, at the television tuner **201.** Also, the recorder **101** displays a program table through remote control manipulation, and records to the HDD **203** a program that is scheduled by the user looking at the program table. Moreover, through a remote control manipulation by the user, it displays a list of recorded programs, and reproduces them. Then, the recorder **101** outputs image data for displaying a menu or the like and video/audio data from the HDMI terminal **205.** Moreover, the recorder **101** indicates to the user whether the recorder **101** is powered ON or OFF by turning the LED **202** on or off.

When outputting data such as a menu image or the like to be drawn, the LSI **202** lays out the data on the memory **204.** The LSI **202** reads the data, and performs a process such as encryption as required under the HDMI standard, and outputs it from the HDMI terminal **205.**

In the present specification, power ON/OFF of the recorder **101** is defined as follows: a state where no output from the HDMI terminal **205** described below exists, as well as a state where power is not supplied to the HDD **203,** is defined as power OFF; any state other than power OFF is defined as "power ON". However, in a power OFF state, when the recorder **101** receives some signal from the remote control **103,** the LSI **202** will usually start various operations. The start of such an operation may be considered as "power ON".

For example, suppose the user presses a POWER button **405** of the remote control **103** or a POWER button (not shown) which is provided on the housing of the recorder **101** in order to end manipulation of the recorder **101.** Even so, while there is video data and/or audio data output from the HDMI terminal **205,** or while power is being supplied to the HDD **203,** the recorder **101** is considered powered ON. On the other hand, if no video data and/or audio data is being output from the HDMI terminal **205** and power is not supplied to the HDD **203,** the recorder **101** is considered powered OFF.

Note that, even while the recorder **101** is in a power OFF state, powering to the memory **204** described below is continued. Therefore, data which is stored in the memory **204** is retained even in a power OFF state.

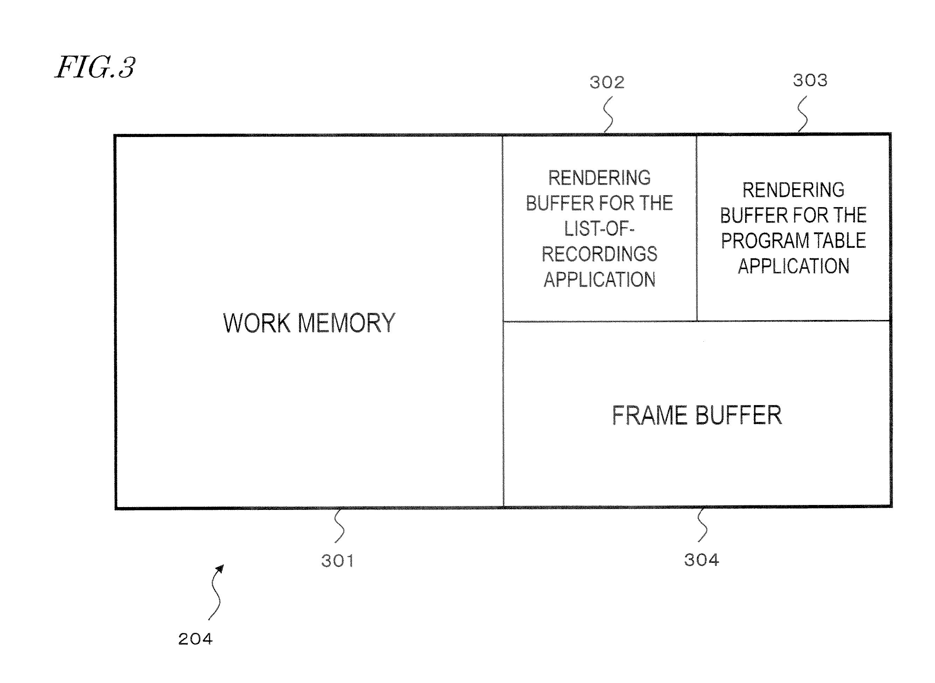

FIG. **3** is a diagram showing the construction of the memory **204** according to the present embodiment. In the present embodiment, it is assumed that the memory **204** is a DRAM. However, the memory **204** does not need to be a DRAM; any other storage medium, e.g., a flash memory, may be used. In this case, it is not necessary for the flash memory to be always powered. In the case where the memory **204** is composed of a flash memory, there is no need to separately provide a buffer memory as in Patent Document 1.

The storage area of the memory **204** is used in subdivisions according to a number of purposes. Specifically, the storage area of the memory **204** is used in the following subdivisions: a work memory **301,** a rendering buffer **302** for the list-of-recordings application, a rendering buffer **303** for the program table application, and a frame buffer **304.** Hereinafter, for simplicity of description, these may be referred to as the rendering buffers **302, 303,** and so on.

The overall capacity of the memory **204** is 512 megabytes (MB), for example. Out of this, for example, the work memory **301** may have a capacity of 488 MB; the rendering buffers **302** and **303** may each have a capacity of 8 MB; and the frame buffer **304** may have a capacity of 8 MB.

The work memory 301 is used, when the recorder **101** operates based on a computer program, for the computer program to be laid out, and to temporarily retain data necessary for the operation. In the present embodiment, as the computer programs, a program of an application for displaying a list of recordings (the list-of-recordings application) and a program of an application for displaying a program table (the program table application) will be described, for instance. These programs are stored in the HDD **203.** The LSI **202** is a computer such as a semiconductor processor. The LSI **202** reads a program from the HDD **203,** lays it out on the work memory **301,** and executes that program.

The rendering buffer **302** for the list-of-recordings application is used to temporarily store image data for displaying a list of recorded programs. This image data is generated by the list-of-recordings application. The rendering buffer **303** for the program table application is used to temporarily store image data for displaying a listed program table. This image data is generated by the program table application. Note that the program table application has a function of carrying out scheduled recording of programs. The frame buffer **304** stores image data for outputting to a displaying device such as a television set. For example, when outputting an image of a list of recordings or an image of a program table to the television set **102,** the LSI **202** transfers the image data which has been stored in the rendering buffers **302** and **303** to the frame buffer **304,** and outputs the image data from the frame buffer **304** to the television set **102** via the HDMI terminal **205.**

### 3. Description of remote control 103

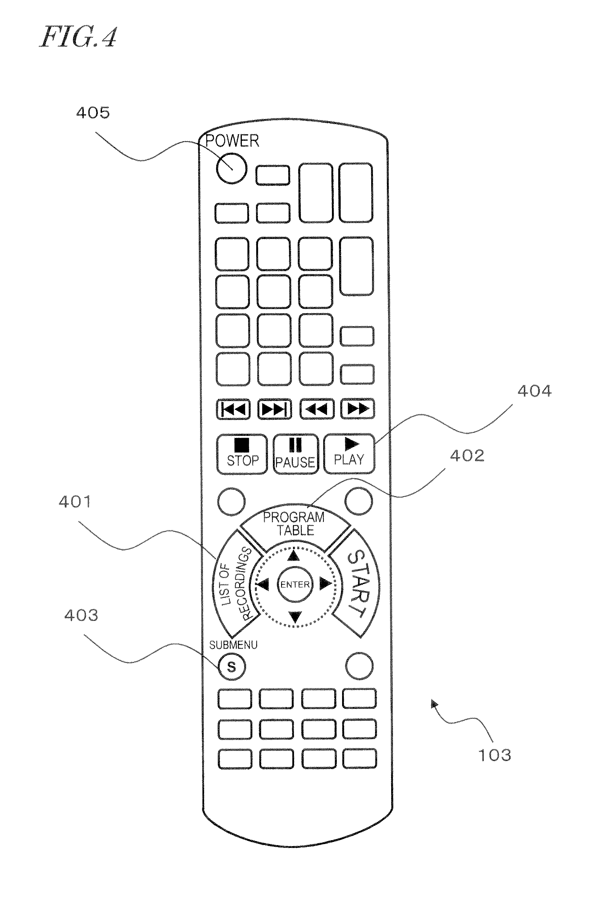

FIG. **4** is an outer view of the remote control 103 according to the present embodiment. As shown in the figure, the remote control **103** has various buttons provided thereon. Among these, five buttons bearing the reference numerals will be described in the present embodiment.

The remote control **103** includes the POWER button **405,** a LIST OF RECORDINGS button **401,** a program table button **402,** a submenu button **403,** and a PLAY button **404.** The POWER button **405** is used to power ON or OFF the recorder **101.** The LIST OF RECORDINGS button **401** is used to start the list-of-recordings application to cause a list of recorded programs to be displayed. The program table button **402** is used to start the program table application to cause a program table to be displayed. The submenu button **403** is used to execute an editing process of a recorded program on the list-of-recordings application. The PLAY button **404** is used to reproduce a selected recorded program on the list-of-recordings application.

### 4. Operation of recorder 101

### 4-1. Transition from power ON to power OFF

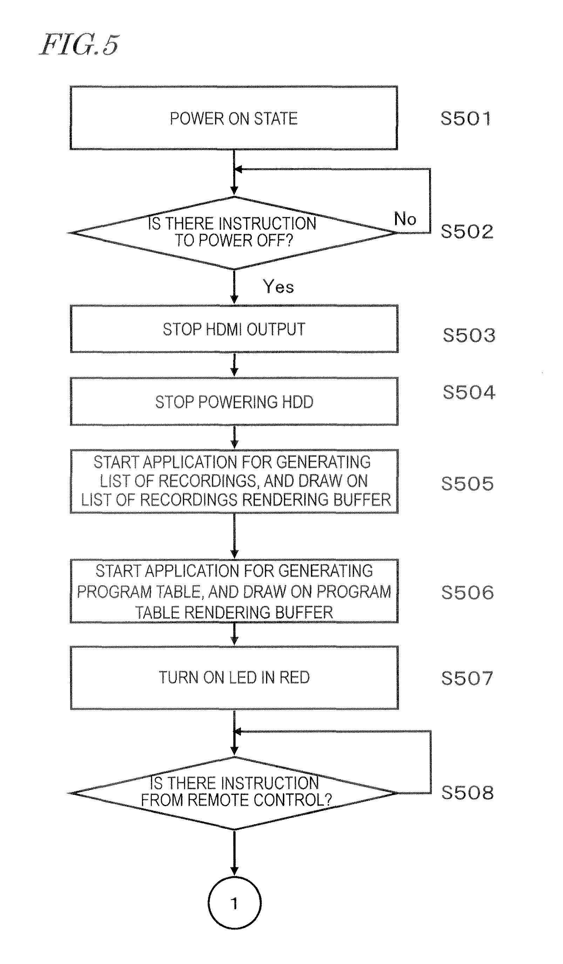

FIG. **5** is a flowchart for explaining a transition from power ON to power OFF of the recorder **101** according to the present embodiment.

In a power ON state of the recorder 101 (S501), if the LSI **202** receives an instruction to power OFF through the user's manipulation of pressing the POWER button **405** of the remote control **103** (Yes from **S502**), outputting of video/audio signals from the HDMI terminal **205** is stopped (**S503**), and powering of the HDD **203** is stopped (**S504**). As a result of this, a transition to the aforementioned power OFF state occurs. However, the LSI **202** and the memory **204** continue on the process.

In other words, the LSI **202** starts the list-of-recordings application, generates an image of a list of recordings data by using a recorded-program information table which is temporarily cached on the memory **204,** and stores the image data to the rendering buffer **302** (**S505**). The details of the recorded-program information table will be described later.

After storing the image data to the rendering buffer **302,** the LSI **202** starts the program table application, generates image data of a program table by using control data which is separately stored on the memory **204,** and stores the image data to the rendering buffer **303** (**S506**).

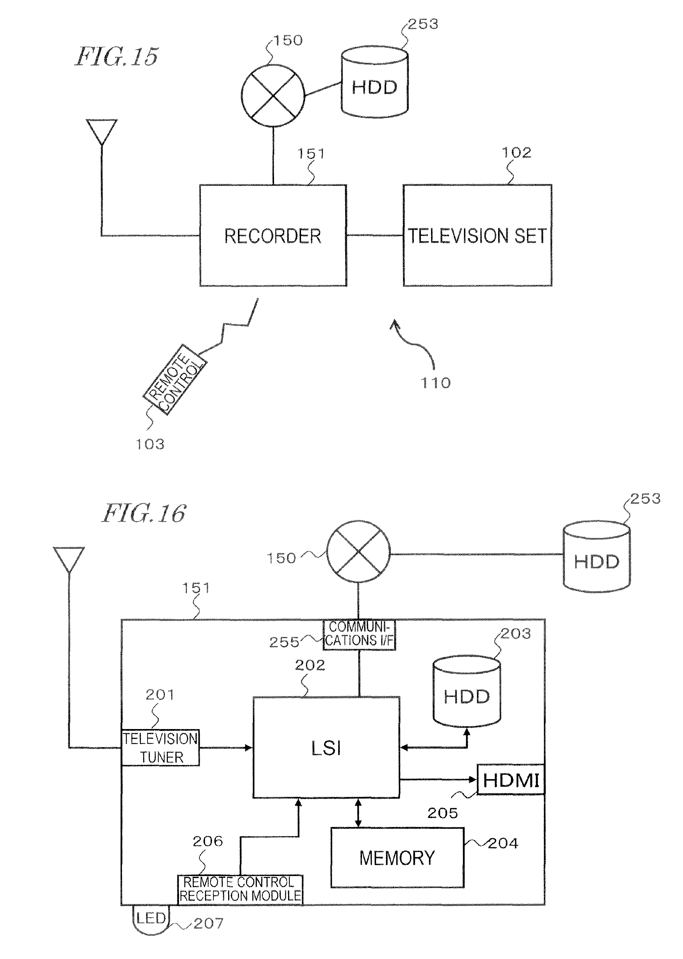

Note that the control data is superposed on a broadcast wave. For example, as the control data, program sequence information SI (Service Information) within the transport stream composing the broadcast wave can be used. Alternatively, the LSI **202** may acquire the control data on the Internet. The recorder **101** shown in FIGS. 1 and 2 is not explicitly shown to be connected to the network. However, by further providing in the recorder **101** a communications interface shown in FIG. **16** described below, for example, the recorder **101** becomes able to acquire control data on the Internet. By using the program sequence information **SI** or control data acquired on the Internet, the program table application generates a program table.

The respective image data of the list of recordings and the program table mentioned above is stored in the rendering buffers **302** and **303** in the form of color data for each unit composing the image (e.g., RGB value data for each pixel). Storing such data in the rendering buffers **302** and **303** allows for faster image displaying.

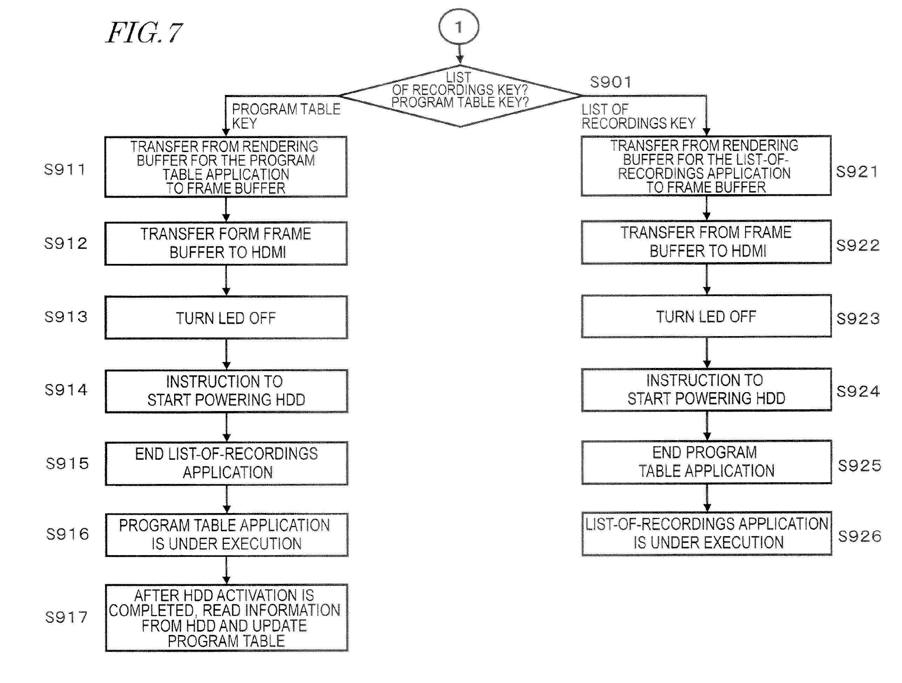

Thereafter, the LSI **202** turns on the LED in red (**S507**), and awaits an instruction from the remote control **103** (**S508**). Then, the LSI **202** stops power supply to the television tuner **201** and the HDD **203.** As a result, the recorder **101** enters a power OFF state. Note that power supply to the memory **204,** including the rendering buffers **302** and **303,** is continued. Although the application stays resident on the work memory **301,** the operation of the application is stopped at this point. Through the above process, the recorder **101** transitions from power ON to power OFF. If a predetermined manipulation is performed after power OFF, a process shown by the flowchart of FIG. 7 described later is executed.

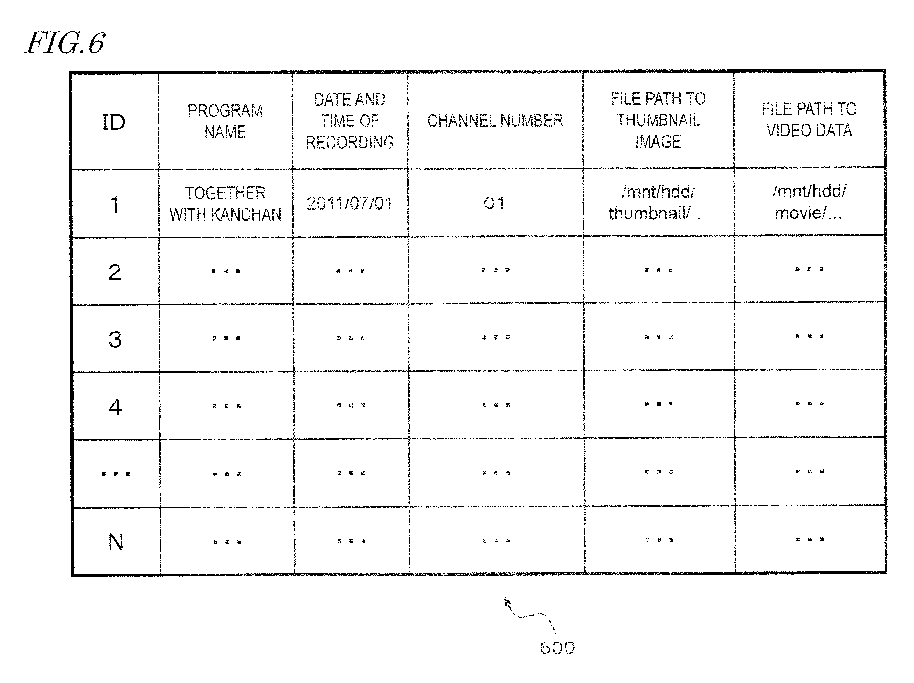

FIG. **6** shows an exemplary recorded-program information table **600** according to the present embodiment. The recorded-program information table **600** is referred to when the list-of-recordings application generates and displays an image. The recorded-program information table **600** according to the present embodiment describes the program names of recorded programs, dates and times of recording, channel numbers, file paths to thumbnail images, and file paths to video data. These data are referred to as metadata or control data.

Note that metadata refers to the entire attribute information concerning a program, including data other than the data that is described in the recorded-program information table **600.** When a program is recorded, the LSI **202** of the recorders **101** stores the video data of the recorded program and all metadata that is related to the program to the HDD **203.**

The list-of-recordings application extracts metadata that is a bare minimum requirement for displaying the image of a list of recordings, and temporarily caches it on the work memory **301** in the memory, as the recorded-program information table **600.**

### 4-2. Transition from power OFF to power ON

FIG. **7** is a flowchart for explaining a transition from power OFF to power ON of the recorder **101** according to the present embodiment. The process of this flowchart is to be executed after the process of the flowchart shown in FIG. **5****.** Therefore, the final state of the flowchart of transition from power ON to power OFF in FIG. **5**, i.e., power OFF state (**S508**), defines the initial state in this flowchart.

### (When the program table button 402 is pressed)

When pressing of the program table button **402** is detected while power is OFF **(S901),** the recorder **101** powers ON the recorder **101** and displays a program table. Specifically, when detecting a manipulation of pressing the program table button **402** of the remote control **103,** the LSI **202** determines that an instruction for displaying the program table has been made **(S901).** The LSI **202** transfers image data 800 from the rendering buffer **303** for the program table application to the frame buffer **304** (**S911**). The LSI **202** outputs the image data from the frame buffer **304,** via the HDMI terminal **205** (**S912**). Moreover, the LSI **202** turns off the LED **(S913),** starts powering the HDD **203** (**S914**), and if the list-of-recordings application is being executed, ends the list-of-recordings application (**S915**). This process is performed in order to avoid squeeze on the capacity of the work memory **301.** It is unnecessary when the work memory **301** has a sufficiently large capacity.

Through the above process, the program table application is now under execution, whereby a program table is displayed (**S916**).

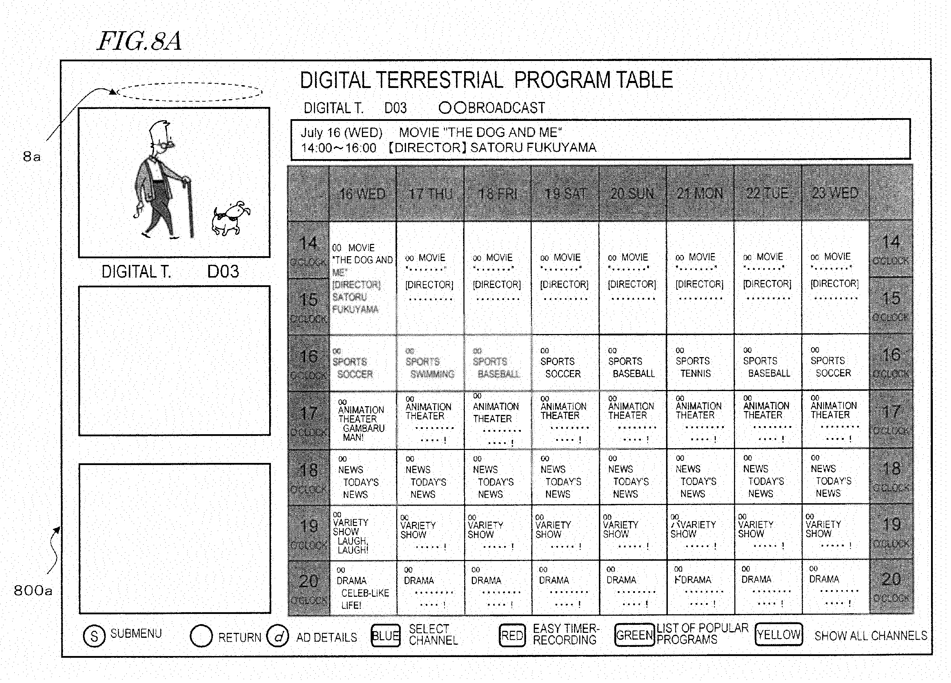

FIG. **8A** shows an exemplary program table **800a** which is displayed after the program table button **402** is pressed. When the program table **800a** is displayed, the activation process of the HDD **203** is not complete yet. Therefore, information which cannot be acquired unless the activation process of the HDD **203** is completed, i.e., information of the remaining time that is recordable on the HDD **203,** cannot be displayed. FIG. **8A** shows an area **8a** in which information of recordable remaining time is to be displayed. It can be seen that nothing is indicated in the area **8a.**

In a portion of the leftmost column of the image **800** of the program table, a thumbnail moving image is being displayed. This thumbnail moving image is the video of a program in the broadcast that is acquired by the television tuner **201.** Since activation of the television tuner **201** from a power OFF state is faster than that of the HDD **203,** the thumbnail mowing image is displayed soon after the program table is displayed. At this time, the activation process (spin-up process) of the HDD **203** is not complete yet.

FIG. 7 is again referred to.

Once the LSI **202** receives from the HDD **203** a notice indicating that activation of the HDD **203** is complete, the process proceeds to step **S917.** From the HDD **203,** the program table application reads information concerning the HDD **203** (e.g., information of the remaining time that is recordable on the HDD **203),** and updates the program table which is already being displayed.

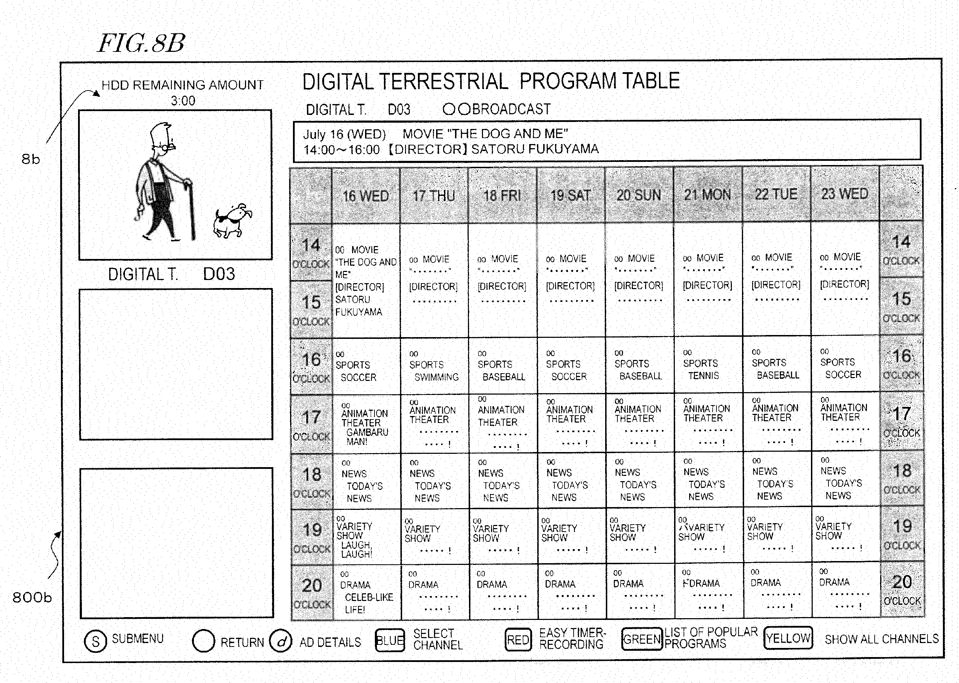

FIG. 8B shows an updated instance of displayed image **800b** of the program table. Information **8b** of remaining time that is recordable on the HDD **203** is indicated in the image **800.**

In the present embodiment, all information that is needed for displaying the programs is stored in the memory **204.** Therefore, irrespective of whether the HDD **203** is accessible or not, the program table application is able to generate the image **800a** of a program table (FIG. **8A****).** As for information which cannot be displayed until completion of the activation process of the HDD **203,** such information is acquired from the HDD **203** after completion of the activation process, whereby the image of a program table is updated (FIG. **8B**).

### (When the LIST OF RECORDINGS button 401 is pressed)

FIG. **7** is again referred to.

If pressing of the LIST OF RECORDINGS button **401** is detected while power is OFF, the recorder **101** is powered ON to display a list of recordings. Specifically, when a manipulation of pressing the LIST OF RECORDINGS button **401** of the remote control **103** is detected, the LSI **202** determines that an instruction for displaying the list of recordings has been made (**S901**). The LSI **202** transfers data of an image 700 from the rendering buffer **302** for the list-of-recordings application to the frame buffer **304** (**S921**), and outputs the image data from the frame buffer **304** via the HDMI terminal **205** (**S922**). Moreover, the LSI **202** turns off the LED (**S923**), starts powering the HDD 203 (**S924**), and if the program table application is being executed, ends the program table application (**S925**). This process is also performed in order to avoid squeeze on the capacity of the work memory **301.** It is unnecessary when the work memory **301** has a sufficiently large capacity. As a result, the list-of-recordings application is now under execution **(S926).** At the point when the list-of-recordings application goes under execution, the spin-up process of the HDD **203** is not complete yet. Therefore, access to the HDD **203** is still impossible.

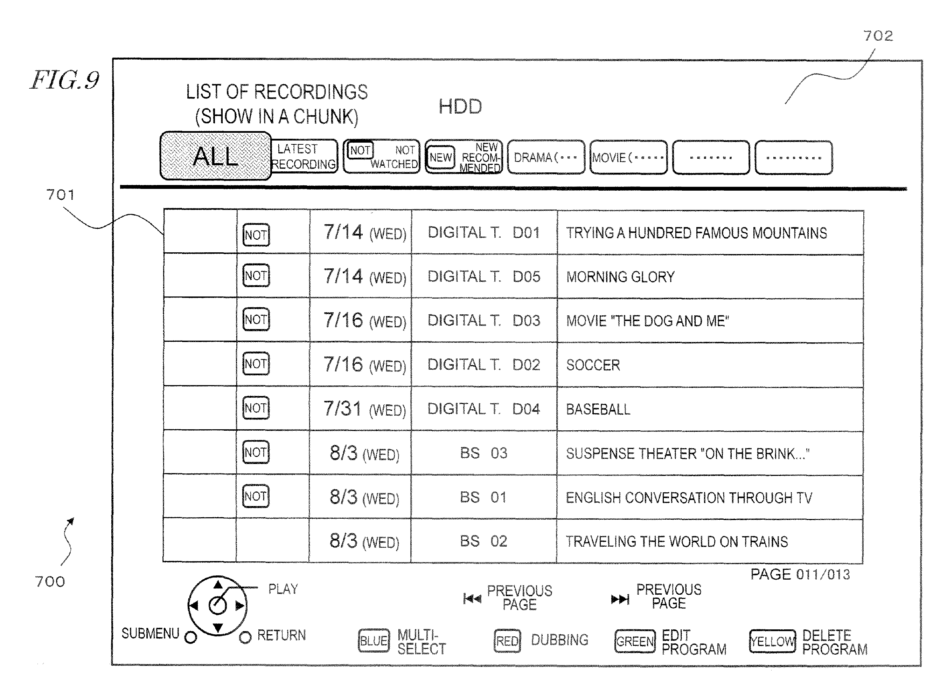

FIG. 9 shows an exemplary image **700** of a list of recordings which is displayed when the HDD **203** cannot be accessed. Since it is impossible to refer to the content of the HDD **203,** the LSI **202** is unable to acquire data that exists only on the HDD **203** or device information concerning the HDD **203.** Specifically, in the present embodiment, the LSI **202** is unable to acquire from the HDD **203** thumbnail images of recorded programs and information concerning the remaining amount that is recordable on the HDD **203.**

Therefore, in the image **700** of a list of recordings that is generated by the list-of-recordings application, information cannot be indicated in a thumbnail region **701** where a thumbnail image is to be displayed, or in an area **702** where the remaining amount that is recordable on the HDD **203** is to be displayed. The LSI **202** generates image data such that the recorded-program thumbnail image displaying region **701** and the HDD remaining amount indicating region **702,** which will indicate something when the HDD is accessible, contain no information indicated therein.

After manipulating the LIST OF RECORDINGS button 401 and the program table button **402** of the remote control 301, without waiting out the time until the HDD **203** becomes accessible, the user is able to allow the desired application to be immediately displayed and manipulate it. As used herein, "immediately" means within 1 second after a button is pressed, for example. Moreover, since powering of the HDD **203** is stopped while power is OFF, power saving and rapid displaying can be reconciled.

### 4-3. Process until HDD 203 becomes accessible

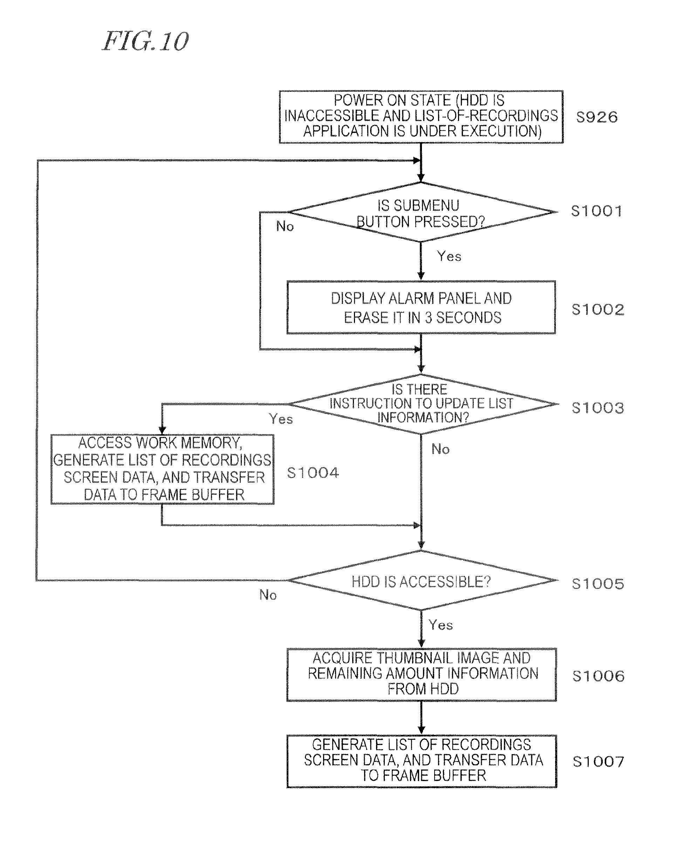

FIG. **10** is a flowchart for explaining a process by the list-of-recordings application according to the present embodiment, which depends on whether HDD access is possible or not. The initial state in this flowchart is the final state of the flowchart of transition from power OFF to power ON in FIG. **7****,** i.e., the list-of-recordings application being under execution (**S926**). As described above, access to the HDD **203** is impossible in this state.

The submenu button **403** is pressed when executing an editing process of a recorded program on the list-of-recordings application.

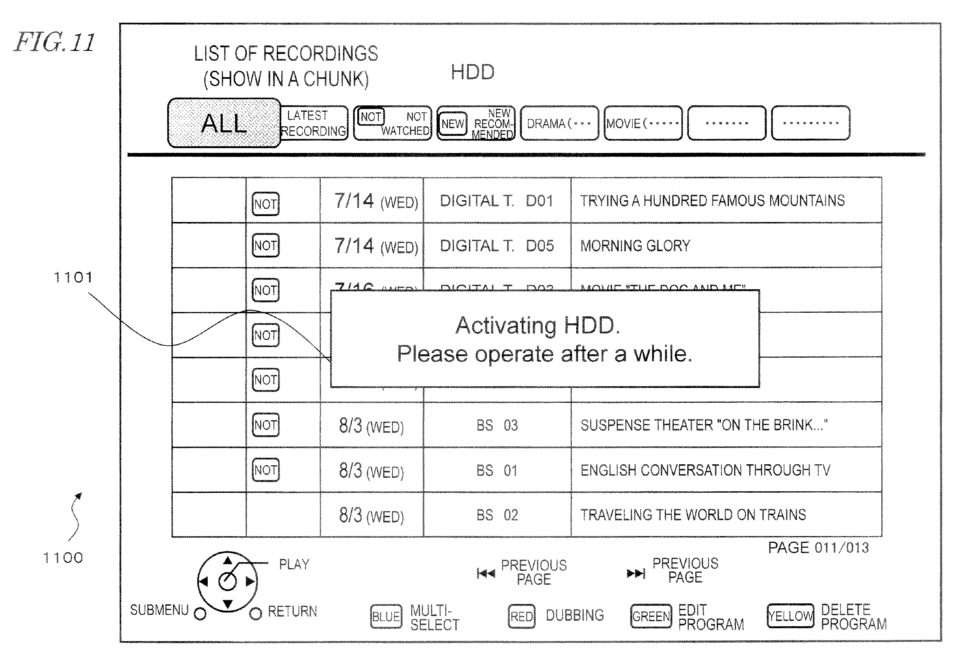

First, if the LSI **202** receives an instruction for editing a recorded program through the user's manipulation of pressing the submenu button **403** of the remote control **103** (**S1001**), the LSI **202** displays a message that asks that the manipulation be made after waiting for a while, and 3 seconds later, erases an alarm panel **1101** from display (**S1002**). FIG. **11** shows an exemplary displayed image of a list of recorded programs **1100** in which the alarm panel **1101** is displayed in superposition. FIG. **11** illustrates the alarm panel **1101** indicating a message "Activating HDD. Please operate after a while."

After displaying this message for about 3 seconds, the LSI **202** discards the instruction for editing, and again enters a state of waiting for an instruction. Although the above illustration describes discarding of an "instruction for editing", the "instruction for editing" is an example. It may be any instruction other an "instruction for editing" that is discarded. For example, it may be an instruction to start dubbing, which requires data write to the HDD **203.** The instruction to be discarded may be previously determined.

FIG. **10** is again referred to. If the user performs a manipulation of page switching or the like through manipulation of the remote control **103,** the LSI **202** determines that this manipulation is an instruction that requests update of the list of programs information (**S1003**). Then, the LSI **202** generates an image of a list of recordings by referring to the recorded-program information table **600** stored on the work memory **301,** and transfers the image data to the rendering buffer **302** for the list-of-recordings application and the frame buffer **304** (**S1004**).

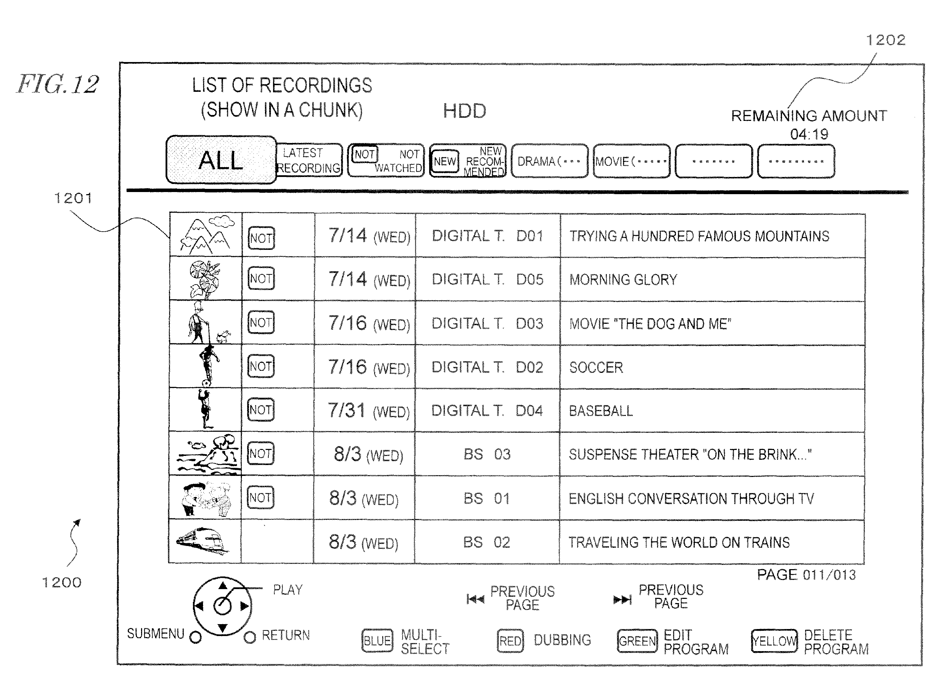

Thereafter, a spin-up process of the HDD **203** is completed. Then, the HDD **203** sends a notice indicating completion of the spin-up process to the LSI **202.** With this notice, the LSI **202** detects that the HDD **203** is now accessible (**S1005**). The LSI **202** accesses the HDD **203,** and acquires information of the remaining amount that is recordable on the HDD **203** and data of thumbnail images of recorded programs that exist on the HDD **203** (**S1006**). Then, the LSI **202** generates image data in which the recorded-program thumbnail image displaying region **1201** and the HDD remaining amount indicating region **1202** are updated. Thereafter, the LSI **202** transfers the image data to the rendering buffer **302** and the frame buffer **304** (**S1007**). As a result, the image of a list of recordings is updated. FIG. **12** shows an updated image **1200** of a list of recordings.

When access to the HDD **203** becomes possible, the LSI **202** updates what is to be displayed in areas that were not yet displayed due to inaccessibility to the HDD **203,** and enables all functions of the list-of-recordings application. This resolves inability to use certain functions, which would be inconvenient to the user if it continued.

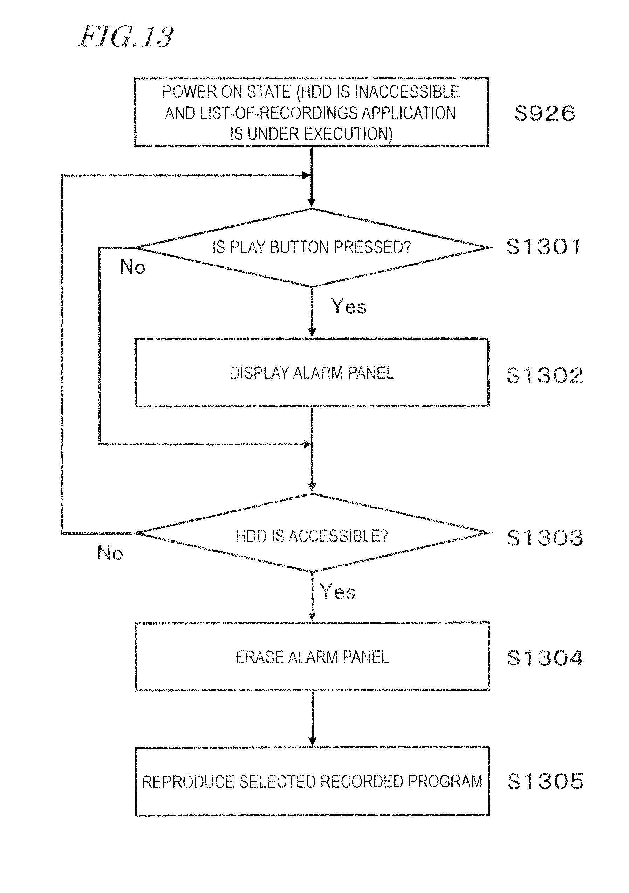

FIG. **13** is a flowchart for explaining a process by the list-of-recordings application according to the present embodiment until HDD access becomes possible. The initial state is the final state of the flowchart of transition from power OFF to power ON in FIG. **7****,** i.e., the list-of-recordings application being under execution (**S926**).

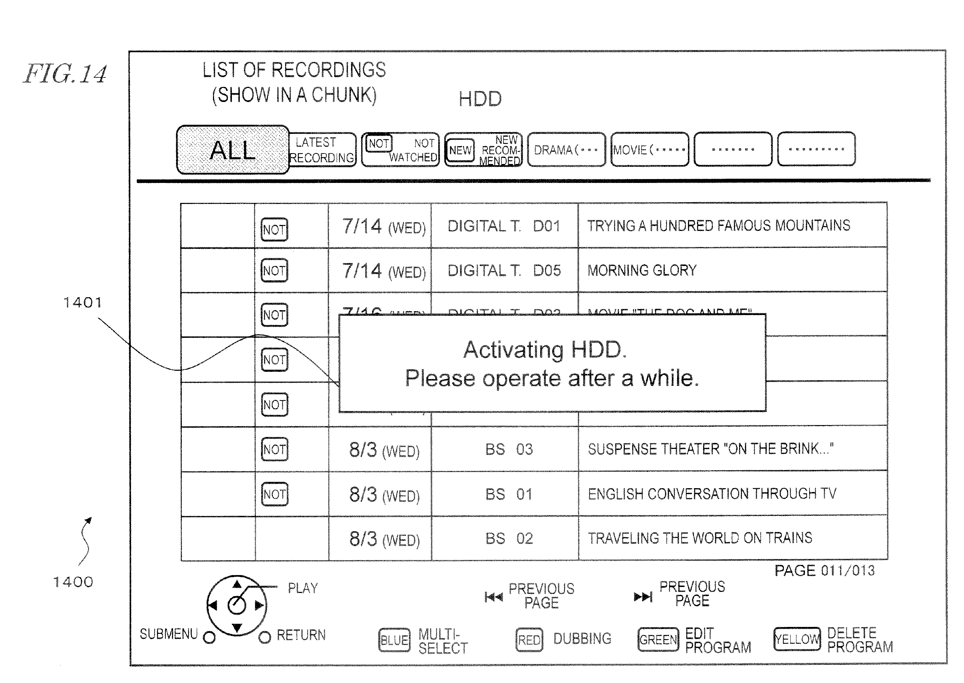

If the user performs a manipulation of pressing the PLAY button **404** of the remote control **103,** the LSI **202** determines that this manipulation is an instruction that requests reproduction of a recorded program (instruction to reproduce)(**S1301**). Then, the LSI **202** indicates a message asking to wait for a while (**S1302**). FIG. **14** shows an exemplary displayed image of a list of recorded programs **1400** in which an alarm panel **1401** is displayed in superposition. In FIG. **14****,** the alarm panel **1401** indicates a message "Activating HDD. Please wait."

FIG. **13** is again referred to. Thereafter, powering and the spin-up process of the HDD **203** are completed. As has been described earlier, upon completion of the spin-up process, the HDD **203** sends a notice of completion of the spin-up process to the LSI **202.** With this notice, the LSI **202** detects that the HDD **203** is now accessible (**S1303**). The LSI **202** erases the alarm panel **1401** from display (**S1304**), and starts reproducing the selected recorded program (**S1305**). Note that video data of recorded programs is stored on the HDD **203,** and, by referring to the file path information to any video data in the recorded-program information table **600,** it is possible to identify the video data to be reproduced.

If the submenu button **403** for performing an editing process of a recorded program is pressed during a period of time in which access to the HDD **203** is impossible, the alarm panel **1101** (FIG. **11****)** is erased, and the alarm panel **1101** is erased 3 seconds later. However, the alarm panel **1101** is not erased when the PLAY button **404** is pressed; the reason is as follows. First, an editing manipulation usually requires various manipulations, and the user is ready to begin manipulations with such awareness. Thus, presumably, there is relatively little reluctance to press the submenu button 403 again to repeat the manipulation. On the other hand, a reproduction manipulation only involves pressing the "PLAY button" **404** for a designated recorded program, and it is clear which manipulation is to be performed. Since the user does not intend to go through manipulations over again, it is preferable to reduce the number of manipulations as much as possible. Such circumstances reflect on the aforementioned operational difference.

On memory, the recorder **101** temporarily caches data that is a bare minimum requirement for the list-of-recordings application to display a list of recordings. This allows the recorder **101** to rapidly display a list of recordings from a power OFF state. More specifically, it is able to display a list of recordings more rapidly (e.g., within 1 second) than by a construction which, as in Patent Document 1, stores data in a flash memory and reads it onto a buffer memory after power activation. The user is able to confirm the list of recordings right away, and then immediately look for a desired program. Furthermore, when the user presses the PLAY key to reproduce a desired program, a message is displayed until the HDD **203** becomes accessible, and a transition to a reproduction process automatically occurs once the HDD becomes accessible. This eliminates unnecessary remote control manipulations of the user, such as pressing the PLAY key many times.

Thus, the recorder **101** has been described as a preferred embodiment of the present invention. The above-described recorder is merely an example of carrying out the present invention. Variants will be described below.

First, without being limited to a BD recorder with an internal HDD, the recorder **101** may be any digital home appliance having the function of playing back contents, such as a BD recorder with an internal HDD, a digital television set, a set-top box, a mobile phone, a car navigation system, or a mobile AV terminal.

Moreover, the program table application described in the above embodiment may be an application having a function of displaying any arbitrary image data, without being limited to a program table.

The list-of-recordings application described in the above embodiment may be an application having a function of displaying a list of contents and a reproduction function, without being limited to a list of recordings.

The items in the metadata thumbnail images, and video data described in the embodiment may be stored in either the HDD **203** or the memory **204.**

The processes of **S911** to **S9**12, **S913**, **S914,** and **S915** in the flowchart may be in a different order, or performed in parallel. Moreover, the processes of **S921** to **S922**, **S923**, **S924**, **S925** in the flowchart may be in a different order, or performed in parallel.

**S1001** is not limited to an instruction for editing by a press of the submenu button, and may be any other operational instruction that involves HDD access.

Without being limited to the infrared method, the remote control **103** and the remote control reception module 206 may be based on other communications protocols, such as RF or IP.

The HDMI terminal **205** may output video according to methods or standards other than the exemplified HDMI standard. For example, instead of the HDMI terminal **205,** a transmitter which is capable of wireless video/audio/data transmission, e.g., according to the wireless HDMI standard, may be provided.

The subdivisions of the memory **204** shown in FIG. **3** are mere examples for convenience of description. It is not necessary for the memory **204** to be physically divided as shown. For example, the work memory **301,** the rendering buffers **302** and **303,** and the frame buffer **304** may be distinguished by addresses in the memory **204.** In that case, the rendering buffers **302** and **303** can be regarded as two partitions within one rendering buffer. In other words, it may be considered that there needs one rendering buffer, the buffer being partitioned by addresses, such that different applications can perform writes without mutual interference.

Moreover, the rendering buffer **302** for the list-of-recordings application, the rendering buffer **303** for the program table application, and the frame buffer **304** in the memory **204** do no need to exist in a single memory module, but may exist in separate storage media. For example, the work memory 301 and the frame buffer **304** may be provided on a DRAM, while the rendering buffers 302 and **303** may be provided on an SRAM.

In the example, absence of power supply to the television tuner **201** may be one requirement for the recorder **101** to be powered OFF. However, this is not essential. In the case where the recorder **101** is able to receive a broadcast signal for recording from another transmission medium, presence or absence of powering of a module which is necessary for receiving that broadcast signal may define one requirement for the recorder **101** to be powered OFF. For example, assuming that the recorder **101** is capable of receiving and recording program contents and program-related information which are distributed via a network circuit such as the Internet or a cable circuit, then, absence of power supply to a terminal connect to any such circuit or a decoder or the like for the received signal may define one requirement for the recorder **101** to powered OFF.

The HDD **203** does not need to be internal. For example, it may be an external USB-HDD, an HDD on a LAN, a storage on a cloud, or other content-storing devices. Moreover, the recorder may have an internal HDD and still be connected to a storage device which is provided externally to the recorder.

For example, FIG. **15** is a diagram showing the construction of a system **110** according to a variant of the present embodiment. A recorder **151** is capable of accessing an HDD **253** via a network **150.** The network **150** is communication lines, e.g., a home LAN or the Internet. The HDD **253** functions as an HDD on a LAN, or as a storage on a cloud. It is assumed in the following description that the network **150** is a home LAN, and that the HDD **253** is an HDD on the LAN, i.e., a LAN-HDD.

Except for what is described below, the recorder **151** is identical to the recorder **101** (FIGS. **1, 2****,** and so on). Therefore, description of any common construction or function will be omitted.

FIG. **16** shows the construction of the recorder **151.** The recorder **101** (FIG. **2****)** has a communications interface (I/F) **255** further added thereto. The communications I/F **255** is a terminal complying with the Ethernet (registered trademark) standard, for example. Via the communications I/F **255,** an LSI **202** of the recorder **151** performs communications with the HDD 253 existing on the network **150.**

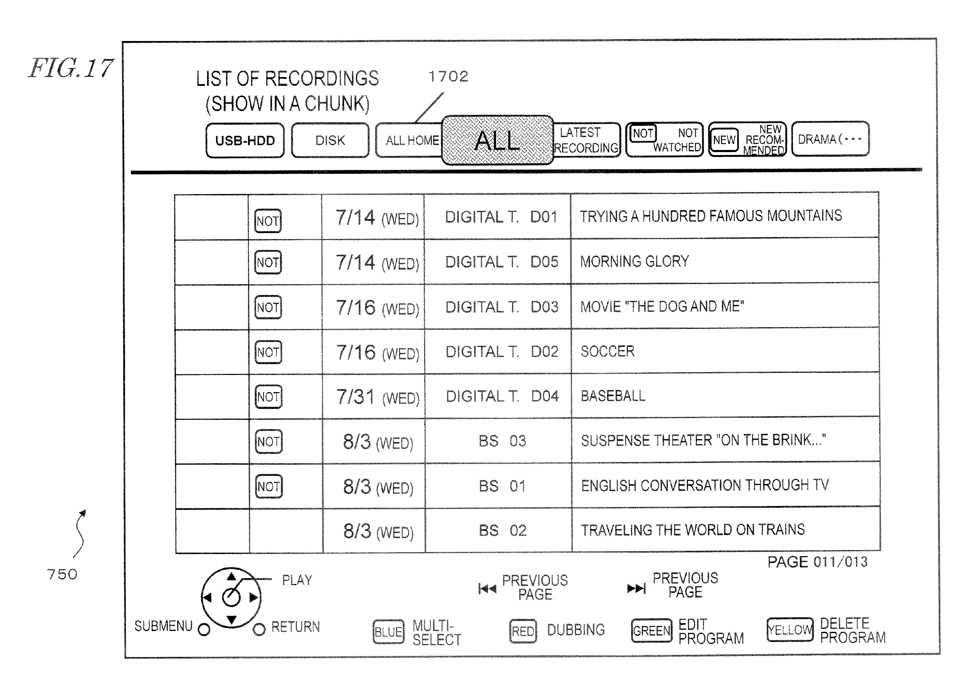

FIG. **17** shows an exemplary image **750** of a list of recordings which is displayed when the HDD **203** and the HDD **253** cannot be accessed. Similarly to FIG. **9****,** no thumbnail image of a recorded program is indicated in a recorded-program thumbnail image displaying region at the leftmost column.

In addition to the example of FIG. **9****,** new menu items are introduced in the upper row: an "ALL HOME" menu item **1702,** "USB-HDD", and "DISK". "ALL HOME" means being in the premises in which the recorder **151** is installed. To be "in the premises" means belonging to the same LAN, for example.

When the "ALL HOME" menu item **1702** is selected, not only the programs stored on the HDD **203** in the recorder **151,** but also all programs stored on the HDD **253** connected to the home LAN **150** become eligible for displaying. Note that the menu items of "USB-HDD" and "DISk" indicate that an external USB-HDD or an optical disk (BD-R, BD-RE, DVD-R, etc.) may be used as a storage medium in which to store programs. Note that the programs that are displayed when "ALL HOME" is selected may be exclusive of those programs which are stored on the HDD **203** in the recorder **151.** In that case, programs which are stored in the other recorders or the like that are in the premises in which the recorder **151** is installed will be displayed.

When the user selects the "ALL HOME" menu item 1702 by using the remote control **103,** a list of recorded programs including the programs which are recorded in the HDD 253 and the like is displayed.

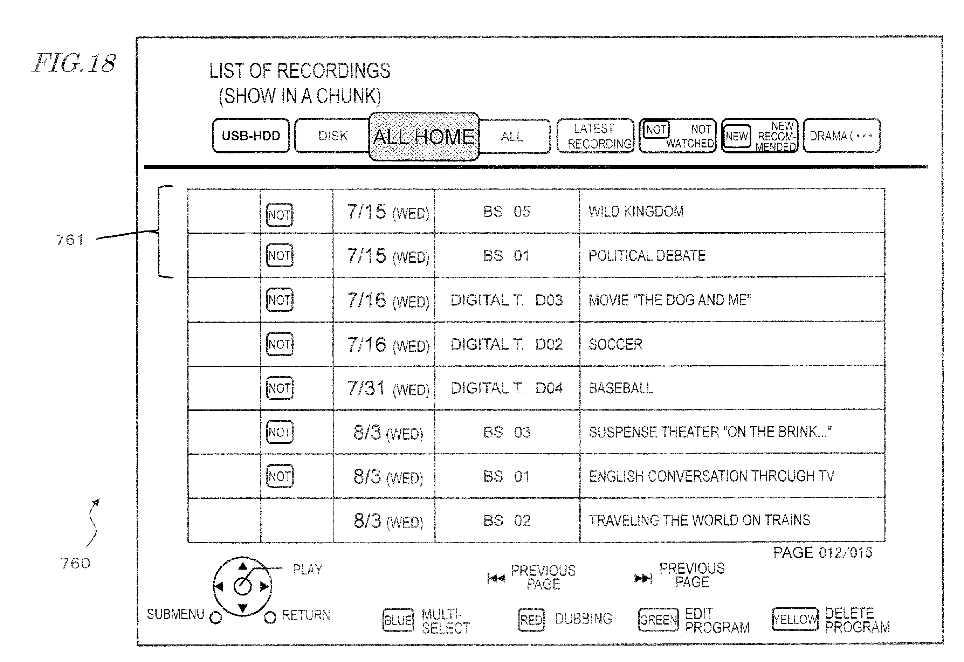

FIG. **18** shows an exemplary image of a list of recorded programs **760** which are stored in all storage media that are accessible to the recorder **151.** For example, the two recorded programs **761** are programs which do not exist in the list of recordings in the HDD **203** shown in FIG. **9****.** These two programs are stored on the HDD **253,** and are to be displayed only after the "ALL HOME" menu item **1702** is selected. Note also that the indications of page number the total number of pages ("page 012/015") at the lower right portion of the list of recorded programs 760 are increased from their counterparts in FIG. **9****.**

The description of the above variant from FIG. **15** to FIG. **18** illustrates that the HDD **203** is provided in the recorder **151.** However, the recorder **151** may lack the HDD **203,** because it suffices if the recorder **151** has a function of recording on the HDD **253,** or a function of reproducing recorded programs or the like therefrom, via the network **150.** In this case, if an instruction to display a program table or an instruction to display a list of recorded programs is received during power OFF, the recorder **151** may read the image data of a program table or a list of recorded programs from the rendering buffer **302** or **303,** even if activation of the HDD **253** is not complete yet.

The present invention can be realized not only as a recorder, but also as a computer program for operating the recorder, for example. Such a computer program contains instruction codes for executing the procedures shown in the flowcharts of FIGS. **5****,** **9****,** **10****,** **13****.**

Moreover, the present invention may be a computer-readable storage medium, e.g., a hard disk, a CD, a DVD (DVD-ROM, DVD-RAM, DVD-RW, DVD-R, DVD+R, etc.), a BD (BD-ROM, BDRE, BD-R, etc.), a semiconductor memory (SD, USB, etc.), or the like having such a computer program or a digital signal recorded thereon. Alternatively, it may be the computer program or digital signal recorded on any such storage medium.

Moreover, the present invention may be a computer program or a digital signal being transmitted over telecommunication lines, wireless or wired communication lines, a network such as the Internet, or the like.

Moreover, the present invention may be a computer system having a microprocessor and a memory, the memory storing the aforementioned computer program, and the microprocessor operating in accordance with the computer program.

Moreover, it may be transported in the form of a program or a digital signal recorded on a storage medium, or transported via a network or the like as a program or a digital signal, for execution on another independent computer system.

### INDUSTRIAL APPLICABILITY

The present invention is applicable to an output apparatus or a recording apparatus having a function of outputting a list of stored contents, e.g., a recorder or a television set.

### REFERENCE SIGNS LIST

- **101, 151**: recorder
- **102**: television set
- **103**: remote control
- **150**: network
- **200**: recorder
- **201**: television tuner
- **202**: LSI
- **203, 253**: HDD
- **204**: memory
- **205**: HDMI terminal
- **206**: remote control reception module
- **207**: LED
- **255**: communications I/F
- **300**: memory
- **301**: work memory
- **302**: rendering buffer for the list-of-recordings application
- **303**: rendering buffer for the program table application
- **304**: frame buffer
- **400**: remote control
- **401**: LIST OF RECORDINGS button
- **402**: program table button
- **403**: submenu button
- **404**: PLAY button
- **405**: POWER button
- **600**: recorded-program information table
- **700**: exemplary image of list of recordings
- **701**: recorded-program thumbnail image displaying region
- **702**: HDD remaining amount indicating region
- **800**: exemplary image of program table
- **1100**: image of list of recordings
- **1102**: alarm panel
- **1200**: image of list of recordings
- **1201**: recorded-program thumbnail displaying region
- **1202**: HDD remaining amount indicating region
- **1400**: image of list of recordings
- **1402**: alarm panel

## Claims

1. A data processing apparatus comprising:
a first storage medium having a relatively long activation time from an initial state until a first access is completed;
a second storage medium having a relatively short said activation time, the second storage medium previously retaining image data;
a reception section for receiving a request to display the image data; and
a control section for executing a first process and a second process when the request to display is received in a power OFF state, wherein,
the first process is a process of outputting the image data retained in the second storage medium, and
the second process is a process of starting activation of the first storage medium, and after activation of the first storage medium is completed so that the first storage medium becomes accessible, outputting data which is stored in the first storage medium or information which is generated based on the data.

2. The data processing apparatus of claim 1, wherein the second storage medium retains image data concerning a program table of broadcast programs.

3. The data processing apparatus of claim 1, wherein, the first storage medium stores at least one content;
and
as the second process, the control section executes a process of outputting the image data concerning the at least one content after the first storage medium becomes accessible.

4. The data processing apparatus of any of claims 1 to 3, wherein,
supply of power to the second storage medium is continued in the power OFF state; and
the second storage medium retains the image data with the supply of power.

5. The data processing apparatus of claim 4, wherein, supply of power to the first storage medium is discontinued in the power OFF state; and
the control section executes the second process by starting supply of power to the first storage medium.

6. The data processing apparatus of claim 5, wherein, if the reception section receives an instruction which requires access to the first storage medium before the first storage medium becomes accessible, the control section executes a process of outputting message data.

7. The data processing apparatus of claim 6, wherein, the first storage medium stores at least one content;
and
if the reception section receives an instruction to reproduce the at least one content before the first storage medium becomes accessible, the control section executes a reproduction process of the content after the first storage medium becomes accessible.

8. The data processing apparatus of claim 6, wherein, if the reception section receives an instruction to execute a predetermined process before the first storage medium becomes accessible, the control section discards the instruction to execute.

9. The data processing apparatus of claim 1, wherein the first storage medium is a hard disk drive and the second storage medium is a DRAM or a flash memory.

10. The data processing apparatus of claim 1, further comprising a terminal which is connected to a display device to output the image data to the display device, wherein,
through the first process, the control section outputs the image data from the terminal to be displayed by the display device.

11. The data processing apparatus of claim 1 or 3, wherein the first storage medium, the second storage medium, the reception section, the control section, and the display device are mounted in a single housing.

12. The data processing apparatus of claim 1, wherein, the second storage medium includes a rendering buffer previously retaining the image data and a frame buffer; and
during the first process, the control section transfers the image data retained in the rendering buffer to the frame buffer, and outputs the image data from the frame buffer.

13. A data processing apparatus comprising:
a first storage medium having a relatively long activation time from an initial state until a first access is completed;
a second storage medium having a relatively short said activation time, the second storage medium previously retaining control data; and
a control section for, when a transition from power ON to power OFF occurs, generating image data based on the control data and causing the image data to be stored to the second storage medium, and stopping operation of the first storage medium, wherein,
when at least one content is stored in the first storage medium,
control data including information concerning the at least one content is stored in the second storage medium, and
the control section generates image data representing the at least one content based on the control data, and causes the image data to be stored to the second storage medium.

14. The data processing apparatus of claim 13, wherein, the second storage medium stores control data including information concerning a plurality of broadcast programs; and
the control section generates image data representing a program table concerning the plurality of broadcast programs based on the control data, and causes the image data to be stored to the second storage medium.

15. The data processing apparatus of claim 13, wherein, as the image data, the control section causes color data with respect to each unit composing an image to be stored to the second storage medium.

16. The data processing apparatus of claim 15, wherein, the second storage medium at least includes a work memory and a rendering buffer; and
the control section causes the image data to be stored to the rendering buffer, and causes data other than the image data to be stored to the work memory.

17. The data processing apparatus of claim 13, wherein the control section stops operation of the first storage medium by discontinuing supply of power to the first storage medium.

18. The data processing apparatus of claim 17, wherein, supply of power to the second storage medium is continued in the power OFF state; and
the second storage medium retains the image data with the supply of power.

19. The data processing apparatus of claim 13, wherein, the control section is a computer; and
the control section executes a program of a first application for generating image data representing a program table concerning the plurality of broadcast programs based on the control data and a program of a second application for generating image data representing the at least one content based on the control data.

20. The data processing apparatus of claim 19, wherein, in the power OFF state, the control section maintains a running state of the first application and the second application.

21. The data processing apparatus of claim 13, wherein, if the reception section receives an instruction to execute a predetermined process before the first storage medium becomes accessible, the control section discards the instruction to execute.

22. A data processing apparatus comprising:
an interface for connecting to a network, the network having connected thereto at least one storage device storing a content;
a storage medium previously retaining image data including information concerning the content stored in the at least one storage device;
a reception section for receiving a request to display the image data; and
a control section for, when the request to display is received in a power OFF state, outputting the image data stored in the storage medium.
